# EUROPEAN PATENT SPECIFICATION

(11) **EP 0 520 777 B1**
(45) Date of publication and mention of the grant of the patent: **03.06.1998**
(21) Application number: 92305817.6
(22) Date of filing: 24.06.1992
(51) Int. Cl.: C08L 83/08, C08K 3/34

(54) **Fluorosilicone rubber compositions**
Fluorsilicon-Kautschukzusammensetzungen
Compositions de caoutchouc à base de fluorosilicones

(30) Priority: 26.06.1991 US 721068
(43) Date of publication of application: 30.12.1992
(73) Proprietor: GENERAL ELECTRIC COMPANY, Schenectady, NY 12345 (US)
(72) Inventor: Evans, Edwin Robert, New York 12065 (US)
(74) Representative: Szary, Anne Catherine, Dr.

(56) References cited:
- GB-A- 827 402
- GB-A- 2 249 552
- US-A- 4 960 811

## Description

### Background of the Invention

The present invention relates to fluorosilicone heat cured rubber compositions. More particularly, the present invention relates to fluorosilicone heat cured rubber compositions containing a filler system which provides the rubber composition with reduced shrinkage and enhanced solvent resistance.

Fluorosilicone heat cured rubber compositions are known in the art. Reference is made, for example, to U.S. Patent Nos. 4,317,899 (Bluestein et al.), 4,525,528 (Bush et al.), and 4,355,121 (Evans).

US-A-4,960,811 discloses a fluorosilicone heat cured rubber composition prepared using a chain modifier mixture comprising vinyl terminated polysiloxanes and silanol terminated siloxanes which allow vinyl-on-chain-ends functionality to easily crosslink unhindered by perfluoroalkyl groups.

GB-A-827402 discloses a process for preparing a heat-curable silicone gum composition, which comprises introducing into a silicone gum convertible by heat to the solid, elastic state, a zeolitic molecular sieve containing an organic peroxidic curing agent adsorbed therein.

Fluorosilicone heat cured rubbers are useful in the production of such items as electrical connectors, molded silicone rubber inserts, tubing, hoses, sheeting, gaskets, and the like. Such items are frequently used in applications which expose them to high temperatures, such as occurs in the automotive and aerospace industries. A disadvantage with molded articles prepared from heat cured fluorosilicone compositions is that such articles tend to undergo shrinkage at elevated temperatures, which makes the articles unsuitable for continued use.

It is desirable to provide a heat cured rubber fluorosilicone composition which undergoes reduced shrinkage at elevated temperatures.

It is further desirable to provide a heat cured rubber fluorosilicone composition which undergoes reduced shrinkage at elevated temperatures and which has enhanced resistance to solvent swell and improved resiliency.

The present invention provides such a heat cured rubber composition.

The present invention is based on the discovery that a binary filler system composed of treated fumed silica filler and micronized potassium aluminosilicate will impart a fluorosilicone rubber composition with a lower degree of shrinkage, improved resiliency, and increased solvent resistance.

### Summary of the Invention

In one aspect of the present invention there is provided a heat curable fluorosilicone rubber composition, comprising comprising by weight:
(1) the composition obtained by reacting at a temperature in the range of from 25°C to 180°C :
   (A) from 93 to 98 parts of an alkenyl-terminated and silanol-terminated diorganopolysiloxane copolymer having a viscosity of from 1,000,000 to 300,000,000 mPas (centipoises) at 25°C., comprising units of the formulae RR¹SiO and R²₂SiO, wherein R is a fluoroalkyl radical, and R¹ and R² are each monovalent hydrocarbon radicals, the RR¹SiO units being present in an amount sufficient to provide a fluorine content of from 36 to 37 weight percent, the ratio of alkenyl endgroups to silanol endgroups being from 65:35 to 75:25, the alkenyl-on-chain content of the copolymer being from 0% to 0.6% by weight; the total silicon-bonded alkenyl content of the copolymer being from 0.007 to 0.02% by weight;
   (B) from 2.0 to 7.0 parts of an alkenyl-terminated and silanol-terminated diorganopolysiloxane copolymer having a viscosity of from 1,000,000 to 300,000,000 mPa·s (centipoise) at 25°C., comprising units of the formulae RR¹SiO and R²₂SiO, wherein R is a fluoroalkyl radical, and R¹ and R² are each monovalent hydrocarbon radicals, the RR¹SiO units being present in an amount sufficient to provide a fluorine content of from 34 to 35.2 weight percent, the ratio of vinyl endgroups to silanol endgroups being from 65:35 to 75:25, the alkenyl-on-chain content of the copolymer being from 1.2% to 1.6% by weight; the total silicon-bonded alkenyl content of the copolymer being from 1.45% to 1.65% by weight; the sum of (A) and (B) being 100 parts;
   (C) from about 1 to 40 parts of a potassium aluminosilicate filler having the formula KAl₂(AlSi₃O₁₀)(OH)₂ or KAl₂(AlSi₃O₁₀)(F)₂ and a surface area of from 5.0 to 6.5 square meters per gram and particles having an average diameter of from 1.0 to 10.0 micrometers and an average thickness of from 0.5 to 1.0 micrometers;
   (D) from 5 to 60 parts of a pre-treated or untreated reinforcing silica filler having a surface area of from 180 to 225 square meters per gram; and
   (E) from 0 to 50.0 parts of a condensable liquid diorganopolysiloxane having the general formula

      HO(R⁴ ₂SiO)_{y}H

      wherein R⁴ is a monovalent substituted or unsubstituted hydrocarbon radical and "y" has a value of from 1 to 20; with the proviso that if the reinforcing silica filler (D) is untreated, (E) is present in an amount of from 5 to 50 parts by weight to in situ treat the untreated silica filler (D);
(2) a catalytic amount of an organic peroxide curing catalyst.

The present invention is also directed to the reaction product (1) described above and to a method for reducing the shrinkage of heat cured fluorosilicone compositions.

The compositions provided by this invention have reduced shrinkage at elevated temperatures, increased solvent resistance and increased resiliency as well as excellent elongation, tear resistance, and hardness properties. In addition, the surface of the cured rubber is smoother and has a perceptibly lower coefficient of friction.

### Detailed Description of the Invention

The present invention is directed to heat curable fluorosilicone rubber compositions which are curable to form rubber products having reduced shrinkage at elevated temperatures, increased solvent resistance and increased resiliency . The improved properties of the product is a result of the use of the binary filler system composed of the potassium aluminosilicate (1)(C) and the fumed silica filler (1)(D).

The heat curable composition of this invention is composed of two parts, (1) the product obtained by reacting components (A)-(E) at 25°C to 180°C; and part (2) a peroxide curing catalyst.

In part (1) of the heat curable composition of this invention, the total sum of (A) and (B) is 100 parts by weight. The amount of (A) is in the range of from 93 to 98, preferably from 94 to 97, and most preferably from 95 to 96, parts by weight. The amount of (B) is in the range of from 2 to 7, preferably from 3 to 6, and most preferably from 4 to 5, parts by weight.

The potassium aluminosilicate filler (C) is present in part (1) in an amount within the range of from 1 to 40, preferably from 5 to 20, and most preferably from 7 to 15, parts by weight per 100 parts of (A) and (B).

The reinforcing silica filler (D) is present in an amount within the range of from 5 to 60, preferably from 23 to 29, and most preferably from 23 to 25, parts by weight per 100 parts of (A) and (B).

The amount of the condensable polydiorganosiloxane (E) will depend on whether the reinforcing silica filler (D) is treated or untreated as defined below. If the silica filler is treated, the presence of (E) is not required but is useful as a plasticizer in the heat curable composition. Thus, if the silica filler is treated, the amount of (E) will vary from 0 to 50 parts by weight. If the silica filler is untreated, (E) will then be used as an in situ treating agent for the silica filler as well as a plasticizer and in that situation will be present in part (1) in an amount sufficient to treat the silica filler.

Part (1) of the heat curable composition of this invention is prepared by reacting (A)-(E) at a temperature in the range of from 25°C to 180°C., typically for a period of from 1 to 4 hours.

The base polymer (Component (A)) used in the method and composition of this invention is an alkenyl-terminated and silanol-terminated diorganopolysiloxane copolymer comprising units of the formulae RR¹SiO and R²₂SiO, wherein R is a fluoroalkyl radical, and R¹ and R² are each monovalent hydrocarbon radicals.

In (A), R, R¹, and R² are each preferably a fluoroalkyl radical containing 3 or more, preferably 3 to 8, carbon atoms, and 1 or more, preferably 1 to 3, fluorine atoms. Examples of such radicals include 3-fluoropropyl; 3,3-difluoropropyl; and 3,3,3-trifluoropropyl. Most preferably, R is a substituted alkyl group such as -CH₂CH₂R³, wherein R³ is perfluoroalkyl containing from 1 to 6 carbon atoms, such as perfluoromethyl, perfluoroethyl, perfluorohexyl, and the like. Most preferably, the R radical is 3,3,3-trifluoropropyl. The R¹ and R² radicals are each preferably methyl.

In (A), the RR¹SiO units are present in an amount sufficient to provide a fluorine content of from 35 to 37, preferably from 35.5 to 37, and most preferably from 36 to 37 weight percent. The ratio of alkenyl endgroups to silanol endgroups is from 65:35 to 75:25, preferably 55:45, and most preferably 60:40. The alkenyl-on-chain content of the copolymer (A) is from 0% to 0.6%, preferably from 0 to 0.3%, and most preferably is 0%, by weight of (A). The total silicon-bonded alkenyl content of the copolymer is from 0.007% to 0.009%, preferably from 0.007% to 0.0085%, and most preferably from 0.0077% to 0.0085% by weight.

(A) has a viscosity of from 1,000,000 to 300,000,000, preferably 180,000,000 to 230,000,000, and most preferably from 190,000,000 to 220,000,000, mPa·s (centipoise) at 25°C.

Component (A) can be prepared by reacting a cyclotrisiloxane containing organo and fluoroalkyl substituent groups, a vinyl-terminated sodium fluorosilanolate, and a chainstopper which is a mixture containing a vinyl-terminated fluorosilicone and silanol-terminated fluorosilicone. The cyclotrisiloxane and the chainstopper are mixed and then heated to a temperature of from 135°-140°C., after which the fluorosilanolate is added to the reaction mixture. The mixture is then held, with agitation, at a temperature in the range of 135°-140°C for about 4 to about 4.5 hours. After the reaction is over, the polymer mixture is neutralized with a silyl phosphate and the cyclics are stripped off. The final product is then extruded through a screen pack having a sieve size of about 150 mesh to remove extraneous materials such as dirt and particulates.

The cyclotrisiloxane used in preparing (A) is preferably a 1,3,5-tris(trifluoropropyl)-1,3,5-trimethylcyclotrisiloxane. Such compounds can be prepared from a cracking process using a trifluoropropylmethylsiloxane hydrolyzate derived from the aqueous hydrolysis of the corresponding pure dichlorosilane, i.e., methyl-3,3,3-trifluoropropyldichlorosilane. The amount of aliphatic unsaturation in the cyclotrisiloxane varies from about 0.0 to about 1.0, preferably from 0.0 to 0.6, and most preferably is 0, weight percent in the total cyclotrisiloxane reactant.

The vinyl-terminated sodium fluorosilanolate used in making (A) is a low molecular weight telomeric fluid containing both sodium silanolate and vinyldimethylsiloxy endgroups. This fluid functions as catalyst for the polymerization of the cyclotrisiloxane to fluorosilicone homopolymers and fluids. It is prepared through the base-catalyzed ring opening of fluorosilicone cyclic trimer in the presence of appropriate chain modifiers, e.g., divinyltetramethylsiloxane, and excess aqueous sodium hydroxide. The base is a 4% solution of previously prepared fluorosilanolate. The base is added to the cyclic trimer and chain modifiers while at 35-45°C over a period of about one hour or the appearance of oiling. The aqueous base is then added over a controlled rate and the reaction is heated to a maximum of120°C. Nitrogen is used initially as a blanket but is then reverted to a sparge to facilitate the removal of water during the stripping operation.

The chain modifier used in making (A) can be a mixture containing 100 parts by weight of a vinyl-terminated fluorosilicone polydimethylsiloxane copolymer and from 2.0 to 5.0 parts by weight of a silanol-terminated fluorosilicone. The vinyl-terminated fluorosilicone polydimethylsilicone copolymer has a fluorosilicone content of 30-60 mole percent. This copolymer and a method for preparing it is disclosed in U.S. Patent No. 4,348,531 (Evans). The silanol-terminated fluorosilicone preferably has the formula 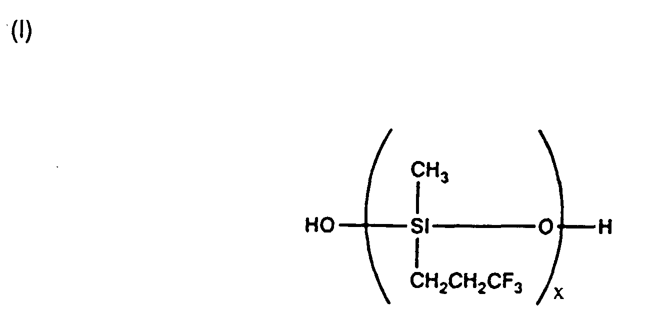 wherein x is preferably 3. It is typically prepared by the acid-catalyzed ring opening of a cyclic trimer of trifluoropropyl-methylsiloxane.

Component (B) used in the method and composition of this invention functions as a crosslinker. It is an alkenyl-terminated and silanol-terminated diorganopolysiloxane copolymer, comprising units of the formulae RR¹SiO and R²₂SiO, wherein R, R¹ and R² are as previously defined herein, the RR¹SiO units being present in an amount sufficient to provide a fluorine content of from 34.5 to 35.2 weight percent, the ratio of vinyl endgroups to silanol endgroups being from 65:35 to 75:25, the alkenyl-on-chain content of the copolymer being from 0% to 0.6% by weight; the total silicon-bonded alkenyl content of the copolymer being from 0.007% to 0.020% by weight; the sum of (A) and (B) being 100 parts.

The preferences for the radicals represented by R, R¹, and R² in vinyl polymer (B) are the same as those for the base polymer (A).

The vinyl polymer (B) has a viscosity of from 1,000,000 to 300,000,000, preferably from 170,000,000 to 220,000,000, and most preferably from 180,000,000 to 200,000,000 mPa·s (centipoises) at 25°C.

In (B), the RR¹SiO units are present in an amount sufficient to provide a fluorine content of from 34.0 to 36.0, preferably from 34.5 to 35.5, and most preferably from 35 to 35.2 weight percent. The ratio of alkenyl endgroups to silanol endgroups is from 65:35 to 75:25, preferably 65:35 and most preferably 70:30. The alkenyl-on-chain content of (B) is from 1.40% to 1.60%, preferably from 1.45 to 1.60 %, and most preferably from 1.50% to 1.60%, by weight. The total silicon-bonded alkenyl content of (B) is from 1.46% to 1.68%, preferably from 1.50% to 1.68%, and most preferably from 1.52 to 1.62% by weight.

Component (B) can be prepared by reacting a cyclotrisiloxane containing organo and fluoroalkyl substituent groups, a vinyl-terminated sodium fluorosilanolate, a methylvinylcyclic trimer, and a vinyl-terminated fluorosilicone polydimethylsiloxane copolymer chainstopper. The cyclotrisiloxane is heated to a temperature of from 130°-135°C., after which the chain modifier, fluorosilanolate and methylvinylcyclic trimer are added to the cyclotrisiloxane. The mixture is then held, with agitation, at a temperature in the range of 135°-140°C for 4 to 4.5 hours. After the reaction is over, the polymer mixture is neutralized with a silyl phosphate and the cyclics are stripped off. The final product is then extruded through a screen pack having a sieve size of about 150 mesh to remove extraneous materials such as dirt and particulates.

The cyclotrisiloxane and vinyl-terminated sodium fluorosilanolate used for making (B) can be the same as those used for making (A).

The vinyl-terminated fluorosilicone polydimethylsiloxane copolymer chain modifier used in the preparation of (B) contains a fluorosilicone content of 47 to 55 mole percent. It is prepared by the polymerization of a methyl-3,3,3-trifluoropropylmethylsiloxane cyclic trimer with octamethylcyclotetrasiloxane in the presence of a vinyl-type chainstopper.

Component (C) in the composition of this invention is a potassium aluminosilicate filler having a specific surface area of from 5.0 to 6.50, preferably from 5.05 to 6.2, and most preferably from 5.07 to 6.11, square meters per gram. The potassium aluminosilicate filler has an average particle diameter of from 1.0 to 20.0, preferably from 1.0 to 10, and most preferably from 1.0 to 5.0 micrometers and an average particle thickness of from 0.5 to 1.0, preferably from 0.5 to 0.8, and most preferably from 0.45 to 0.55, micrometers.

The surface area of the potassium aluminisilicate filler is critical to this invention because a surface area which is too large will lead to an increase in the final cured product's durometer, an increase in its modulus, a decrease in its elongation and a decrease in its tear properties. On the other hand, a surface area which is too small will lead to a decrease in the final cured product's durometer, a decrease in its modulus, an increase in its elongation and an increase in its tear properties.

The average particle size in the potassium aluminosilicate filler is also critical to this invention because if the average particle size is too large, the permeability and swell properties of the final cured product increase and it becomes more difficult to control the shrinkage of the cured product. If the particle size is too small, the modulus of the cured product increases, which makes the curable composition harder to work with and causes it to crumble easily.

In addition, the amount of potassium aluminosilicate is critical to this invention because if an insufficient amount is used, there will be no reduction in the shrinkage of the final cured product.

The potassium aluminosilicate (C) has the formula KAl₂(AlSi₃O₁₀)(OH)₂ or KAl₂(AlSi₃O₁₀)(F)₂. The most preferred potassium aluminosilicate filler for use herein is potassium mica (also known as muscovite), having the formula KAl₂(AlSi₃O₁₀)(OH)₂, which is a natural hydrous potassium aluminum silicate of the mica group.

The potassium aluminosilicate fillers used in the compositions of this invention have a highly delaminated flake structure. The micronized muscovite micas are preferred over the wet-ground muscovites due to the former's smaller average particle size. The laminar structure of the mica helps to create a uniform pore structure in the cured matrix which leads to lower compression set, reduced permeation of gases and liquids, and a lower degree of shrinkage of the cured final product.

Potassium aluminosilicate compounds are known in the art and can be obtained commercially.

Component (D) in the compositions of this invention is a pre-treated or untreated reinforcing silica filler.

The reinforcing silica filler (D) comprises fine powdery silica conventionally known, such as, for example, fumed silica, precipitated silica, silica aerogel, and the like. The most preferred reinforcing silica filler for use in the present invention is fumed silica.

The term "pre-treated" as used herein refers to silica fillers which have been treated with a treating agent prior to the silica filler's contact with components (A), (B), (C), and, if present, (E). The treating agent reacts with the silanol end groups on the surface of the silica fillers. Alternatively, the silica filler may be untreated (raw) when it is placed in contact with (A), (B), (C), and (E) and then in situ treated by appropriate amounts of (E). In any case, it is critical to the present invention that the silica filler be treated prior to the addition of the cure catayst to the composition containing (A)-(E). Treatment is necessary because without it, the silanol end groups on the surface of the silica fillers have a tendency to cause structuring of an uncured compound on standing.

The silica filler may be treated prior to its contact with (A)-(C) and (E) by methods known in the art. Reference is made, for example, to U.S. Patent No. 4,529,522 (Evans et al.). In the method disclosed in the patent to Evans et al., silica fillers are exposed in the vapor phase to the direct hydrolyzate of diorganosilanes at temperatures of from 240°C to 310°C. These direct hydrolyzates are compounds comprising cyclic and linear diorganopolysiloxanes.

Preferably, the silica filler is treated in situ with (E) according to the method taught in U.S. Patent No. 4,724,167 to Evans et al. (Evans). According to the Evans method, silica reinforcing filler is contacted at a temperature of at most about 210°C with a liquid condensable diorganopolysiloxane having hydroxy or alkoxy functionality for a time sufficient to achieve the desired treatment.

The silica filler (D) has a surface area of from 180 to 225, preferably from 200 to 220, and most preferably from 210 to 215 square meters per gram. The surface area of the filler is critical to this invention because a surface area which is too large will lead to an increase in the final cured product's durometer, an increase in its modulus, a decrease in its elongation and a decrease in its tear properties. On the other hand, a surface area which is too small will lead to a decrease in the final cured product's durometer, a decrease in its modulus, an increase in its elongation and an increase in its tear properties.

The amount of silica filler is also critical to the present invention because an insufficient amount will cause a decrease in the the tear, modulus and elongation of the cured product.

As mentioned previously herein, component (E) is a condensable liquid diorganopolysiloxane having the general formula

(12) HO(R⁴ ₂SiO)_{y}H

wherein R⁴ is a monovalent substituted or unsubstituted hydrocarbon radical and "y" has a value of from 1 to 20. Preferably, the condensable diorganopolysiloxanes represented by formula (12) are all hydroxy terminated diorganopolysiloxanes. It is preferred that R⁴ is generally at least 50% by number methyl with the balance selected from alkyl, such as methyl, ethyl, propyl, butyl and hexyl, alkenyl, such as vinyl; aryl, such as phenyl; cycloalkyl, such as cyclopentyl, cyclohexyl and cycloheptyl; halogenated alkyl, such as 3-chloropropyl, 4-chlorobutyl, 3,3-difluoroallyl and 3,3,3-trifluoropropyl; halogenated aryl, such as 3-fluorophenyl; halogenated cycloalkyl. Where R⁴ is halogenated, the preferred R⁴ is -CH₂CH₂R⁵ where R⁵ is perfluoroalkyl, such as perfluoromethyl, perfluoroethyl and perfluorohexyl. In formula (II), R⁴ most preferably represents the -CH₂CH₂R⁵ radical where R⁵ is perfluoroalkyl and most preferably perfluoromethyl.

In formula (II), "y" is preferably a number in the range of 2 to 10 and most preferably 3.

The amount of (E) used in part (1) will vary according to whether it is to be used as an in situ treating agent for the silica filler. If the silica filler is treated previously, (E) is not required to be present. If it is desired to be present, for example, if it is to be used as a plasticizer and an anti-structuring agent, then (E) will be present in an amount up to 4 parts, preferably from 0.5 to 3.0, and most preferably from 0.5 to 2.0 parts by weight per 100 parts of (A) and (B). If the silica filler is untreated, (E) is used in an amount sufficient to treat the silica filler, which is typically in the range of from 5 to 50 parts by weight, preferably from 17 to 30 parts by weight, and most preferably from 19 to 25 parts by weight for each 100 parts by weight of silica.

The combination of the reinforcing silica filler (C) and the potassium aluminosilicate filler (D) yields a % linear shrinkage (as measured using an optical comparator on a 18.41cm x 3.81cm x 6.35 mm (7 1/4" x 1 1/2" x 1/4") molded slab after post baking for 4 hours at 200°C) of 2.0 to 3.5% (dependent upon loading of fillers). The degree of solvent resistance is dependent upon the total mixed filler loading, but in general a decrease of approximately 6-10% in swell is observed when the alkali aluminosilicate filler is present at about 8-10 parts by weight per 100 parts of (A) and (B).

The curing of the fluorosilicone rubber composition of the present invention can be effected by chemical vulcanizing agents or by high energy electron radiation. More often, chemical vulcanizing agents are used for the curing operation and any of the conventional curing agents can be used. The preferred curing agents are organic peroxides (C) conventionally used to cure silicone elastomers.

Thus, part (2) of the heat curable composition of this invention is an organic peroxide curing catalyst.

The most suitable peroxide catalysts are compounds of the formula, AOOH or AOOA, in which A is an organic radical, especially those compounds in which at least one peroxide oxygen is attached to a tertiary carbon atom. Preferred peroxide catalysts include, for example, t-butyl hydroperoxide, cumene hydroperoxide, decaline hydroperoxide, di-t-butyl peroxide, dicumyl peroxide, and 2,5-dimethyl-2,5-di-(t-butyl peroxy)hexane. The peroxides containing tertiary alkoxy radicals are more efficient in abstracting hydrogen or halogen atoms from the pendant organic groups linked to the silicon atoms, and are therefore preferred. The most preferred of these is 2,5-dimethyl-2,5-di-(t-butyl peroxy)hexane, which is available commercially, e.g., at 45% by weight on an inert filler under the tradenames, VAROX® (R. T. Vanderbilt Co., Inc.) and LUPERCO® 101XL (Lucidol Division, Pennwalt Corp.)

The curing catalyst (2) is used in a catalytic amount, which is typically in the range of from 1.0 to 2.0, preferably from 1.0 to 1.5, and most preferably from 1.0 to 1.3, parts by weight per 100 parts of (A) and (B) of part (1) of the heat curable composition.

The composition of this invention may further contain flame retardants, e.g., platinum (as platinum or in combination with other materials such as triallylisocyanurate); adhesion promoters, such as organic silazanes, which promote bonding between fillers and the gum; and other additives, including anti-oxidants, processing aids (e.g., silanol fluids) supplemental curing agents (e.g., materials that provide additional vinyl curing sites) such as trimethylol propane trimethacrylate (Sartomer® 350; Sartomer Co.), triallyl trimellitate (Sipomer ® TATM; Alcolac, Inc.), 1,3,5-trimethyl-1,3,5-trivinylcyclotetrasiloxane; 1,3,5,7-tetramethyl-1,3,5,7-tetravinylcyclotetrasiloxane, and the like.

The heat curable composition of this invention containing part (1) and part (2) may be cured at elevated temperatures, for example, from 100°C to 300°C, or by exposure to radiation, to produce fluorosilicone elastomers having the aforementioned physical properties.

In order to better able the artisan to practice the present invention, the following examples are provided by way of illustration and not by way of limitation. All parts and percentages are by weight unless otherwise noted.

### Experimental

In the examples below, the following terms are defined as follows:

"FS Polymer I" - refers to a blend containing 98 parts by weight of (i) a vinyl-terminated polymethyl-3,3,3-trifluoropropylsiloxane having a viscosity of about 200,000,000 mPa·s (centipoises) at 25°C, no vinyl-on-chain content, a total vinyl content of 0.007-0.020% by weight, and a fluorine content of 36.5-37 % by weight, and 2.0 parts by weight of (ii) a vinyl-terminated polymethyl-3,3,3-trifluoropropylsiloxane having a viscosity of 200,000,000 mPa·s (centipoises) at 25°C, a vinyl-on-chain content of 1.4-1.6% by weight, a vinyl end group content of 0.007-0.020% by weight, and a fluorine content of 34.5-35.2 % weight.

"FS Polymer II" - refers to a vinyl-terminated-polymethylfluoropropylsiloxydimethylsiloxy copolymer having a viscosity of about 160,000,000-200,000,000 mPa.s (centipoises) at 25°C, a total vinyl content of about 0.032% by weight, and a fluorosilicone content of 80% by weight.

"Fumed Silica MS-7" - refers to fumed silica filler.

"M.M.C-3000" - refers to a muscovite having an average particle thickness of about 0.5 micrometers and an average particle diameter of about 5-10 micrometers.

"FS Silanol Fluid" - refers to fluorodisiloxanol telomeric fluid having a silanol content of about 6.0-6.7% by weight, a fluorosilicone content of about 37 % by weight, and a viscosity of about 70-110 mPa.s (centipoises) at 25°C. The fluorodisiloxanol telomeric fluid has the formula

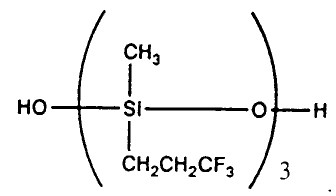

"PC L" - refers to % change in length after press cure.

"PC W" - refers to % change in width after press cure.

"PB L" - refers to % change in length after post bake.

"PB W" - refers to % change in width after post bake.

### Examples 1-7

Eight compositions having the formulations shown in Table 1 below were prepared. Example 1 is a comparative example containing no alkali aluminosilicate filler.

**TABLE 1**

| | Examples 1-7: Formulations | | | | | | |
|---|---|---|---|---|---|---|---|
| | Example No. | | | | | | |
| Ingredient | 1 | 2 | 3 | 4 | 5 | 6 | 7 |
| FS Polymer I | 102.5 | 102.5 | 102.5 | 102.5 | 102.5 | 102.5 | 102.5 |
| Fumed Silica MS-7 | 26 | 25 | 23 | 23 | 23 | 23 | 23 |
| M.M.C-3000 | - | 5.0 | 8.0 | 8.0 | 8.0 | 8.0 | 8.0 |
| FS Silanol Fluid | 4.8 | 5.8 | 5.9 | 5.9 | 5.9 | 5.9 | 5.9 |

Each composition was catalyzed with 1.0 part by weight of 2,5-dimethyl-2,5-di(t-butylperoxy)hexane having an active oxygen content of 4.9%), press cured for 15 minutes at 177°C, and then post-baked for 4 hours at 200°C. The physical properties of the compositions are presented in Table 2 below.

**TABLE 2**

| | Examples 1-7: Properties | | | | | | |
|---|---|---|---|---|---|---|---|
| | Example No. | | | | | | |
| Property | 1 | 2 | 3 | 4 | 5 | 6 | 7 |
| Shore A | 43 | 49 | 42 | 44 | 44 | 41 | 43 |
| 100% | (240) | (335) | (180) | (240) | (208) | (185) | (215) |
| Modulus,(psi) kPa | 1656 | 2312 | 1242 | 1656 | 1435 | 1277 | 1484 |
| Tensile,(psi) | (1555) | (1525) | (1450) | (1500) | (1405) | (1370) | (1295) |
| kPa | 10730 | 10523 | 10005 | 10350 | 9695 | 9453 | 8936 |
| Elongation, % | 397 | 392 | 519 | 440 | 480 | 485 | 422 |
| Die B Tear, | (176) | (169) | (146) | (155) | (135) | (140) | (157) |
| (ppi)kg/m | 3143 | 3018 | 2607 | 2768 | 2411 | 2500 | 2804 |
| Specific Gravity | 1.462 | 1.464 | 1.471 | 1.465 | 1.467 | 1.457 | 1.465 |
| Compression Set 22 hrs/177°C | 13.0 | 14.5 | 13.1 | 11.2 | 9.8 | 10.4 | - |
| Bashore, % | 23 | - | - | 27 | 27 | 29 | 31 |

| % Linear Shrinkage | | | | | | | |
|---|---|---|---|---|---|---|---|
| PC L | 3.30 | 3.24 | - | 2.6 | 2.8 | 2.4 | 2.7 |
| PC W | 1.90 | 1.91 | - | 1.6 | 1.8 | 1.5 | 1.5 |
| PB L | 3.77 | 3.76 | 3.25 | 3.2 | 3.4 | 2.9 | 3.3 |
| PB W | 2.34 | 2.12 | 2.30 | 2.6 | 2.1 | 2.0 | 2.1 |
| Volume Swell* Volume % | 34.0 | 27.3 | | | | | |

| | | | | | | | |
|---|---|---|---|---|---|---|---|
| * Measured after 96 hours using as the fuel a blend containing (i) 75% by volume of a 50:50 blend of toluene and 2,2,5-trimethylpentane and (ii) 25% by volume of methanol. | | | | | | | |

The composition of the comparative example (Example 1) displayed the standard degree of shrinkage of about 3.77% after post-baking.

### Examples 8 and 9 (Comparative)

Two compositions having the formulations shown in Table 3 were prepared. Example 8 contains no alkali aluminosilicate filler.

**TABLE 3:**

| Examples 8 and 9: Formulations | | |
|---|---|---|
| | Example No. | |
| Ingredient | 8 | 9 |
| FS Polymer II | 101.92 | 101.92 |
| Fumed Silica MS-7 | 26.0 | 23.0 |
| M.M.C-3000 | - | 8.0 |
| FS Silanol Fluid | 5.66 | 6.0 |

Each composition was catalyzed with 1.0 part by weight of 2,5-dimethyl-2,5-di(t-butylperoxy)hexane having an active oxygen content of 4.9%), press cured for 15 minutes at 177°C, and then post-baked for 4 hours at 200°C. The physical properties of the compositions prepared in Examples 8 and 9 are presented in Table 4 below.

**TABLE 4**

| Examples 8 and 9: Properties | | |
|---|---|---|
| | Example No. | |
| Property | 8 | 9 |
| Shore A | 42 | 42 |
| 100% Modulus, psi | 195 | 210 |
| Tensile,(psi) kPa | (1090) 7521 | (820) 5658 |
| Elongation, % | 360 | 349 |
| Die B Tear, | (116) | (85) |
| (ppi) kg/m | 2072 | 1518 |
| Specific Gravity | 1.385 | 1.386 |
| Compression Set 22 hrs/177°C | 15.3 | 19.2 |
| Bashore, % | 37 | 43 |

| % Linear Shrinkage | | |
|---|---|---|
| PC L | 3.56 | 2.4 |
| PC W | 2.18 | 1.54 |
| PB L | 4.5 | 3.1 |
| PB W | 2.86 | 2.0 |
| Volume Swell* | | |
| Volume % | 70.0 | 64.0 |
| Heat Age** | | |
| Shore A, points change | +2 | +1 |
| Tensile, % change | -9.1 | +10.6 |
| Elongation, % change | -4.0 | +3.7 |

| | | |
|---|---|---|
| * Measured after 96 hours using as the fuel a blend containing (i) 75% by volume of a 50:50 blend of toluene and 2,2,5-trimethylpentane and (ii) 25% by volume of methanol. | | |
| **Heat aged at 200°C for 70 hours. | | |

The examples above show that the compositions containing alkali aluminosilicate filler have a reduced degree of shrinkage, increased resilience and increased solvent resistance.

## Claims

1. A heat curable fluorosilicone rubber composition, comprising by weight:
(1) the composition obtained by reacting at a temperature in the range of from 25°C to 180°C:
(A) from 93 to 98 parts of an alkenyl-terminated and silanol-terminated diorganopolysiloxane copolymer having a viscosity of from 1,000,000 to 300,000,000 mPa.s (centipoises) at 25°C., comprising units of the formulae RR¹SiO and R²₂SiO, wherein R is a fluoroalkyl radical, and R¹ and R² are each monovalent hydrocarbon radicals, the RR¹SiO units being present in an amount sufficient to provide a fluorine content of from 36 to 37 weight percent, the ratio of alkenyl endgroups to silanol endgroups being from 65:35 to 75:25, the alkenyl-on-chain content of the copolymer being from 0% to 0.6% by weight; the total silicon-bonded alkenyl content of the copolymer being from 0.007 to 0.02% by weight;
(B) from 2.0 to 7.0 parts of an alkenyl-terminated and silanol-terminated diorganopolysiloxane copolymer having a viscosity of from 1,000,000 to 300,000,000 mPa.s (centipoise) at 25°C., comprising units of the formulae RR¹SiO and R²₂SiO, wherein R is a fluoroalkyl radical, and R¹ and R² are each monovalent hydrocarbon radicals, the RR¹SiO units being present in an amount sufficient to provide a fluorine content of from 34 to 35.2 weight percent, the ratio of vinyl endgroups to silanol endgroups being from 65:35 to 75:25, the alkenyl-on-chain content of the copolymer being from 1.2% to 1.6% by weight; the total silicon-bonded alkenyl content of the copolymer being from 1.45% to 1.65% by weight; the sum of (A) and (B) being 100 parts;
(C) from 1 to 40 parts of a potassium aluminosilicate filler having the formula KAl₂(AlSi₃O₁₀)(OH)₂ or KAl₂(AlSi₃O₁₀)(F)₂ and having a surface area of from 5.0 to 6.50 square meters per gram and particles having an average diameter of from 1.0 to 20.0 micrometers and an average thickness of from 0.5 to 1.0 micrometers;
(D) from 5 to 60 parts of a pretreated or untreated reinforcing silica filler having a surface area of from 180 to 225 square meters per gram; and
(E) from 0 to 50 parts of a condensable liquid diorganopolysiloxane having the general formula
HO(R⁴ ₂SiO)_{y}H
wherein R⁴ is a monovalent substituted or unsubstituted hydrocarbon radical and "y" has a value of from about 1 to about 20; with the proviso that if the reinforcing silica filler (D) is untreated, (E) is present in an amount of from 5 to 50 parts by weight to in situ treat the untreated silica filler (D);
and (2) a catalytic amount of an organic peroxide curing catalyst.

2. A composition according to Claim 1 wherein the potassium aluminosilicate filler (1)(C) has a surface area of from 5.05 to 6.2 square meters per gram.

3. A composition according to Claim 1 or Claim 2 wherein the potassium aluminosilicate filler (1)(C) has an average particle diameter of from 1.0 to 10.0 micrometers and an average particle thickness of from 0.5 to 0.8 micrometer.

4. A composition according to any preceding claim wherein the reinforcing silica filler (1)(D) is fumed silica.

5. A composition according to any preceding claim wherein the silica filler (1)(D) is pretreated.

6. A composition according to any one of Claims 1 to 4 wherein the silica filler (1)(D) is in situ treated by the condensable liquid diorganopolysiloxane (1)(E).

7. A composition according to Claim 6 wherein (1) (E) is present in an amount ranging from 5 to 50 parts by weight per 100 parts of silica filler (C).

8. A composition according to any preceding claim wherein the organic peroxide curing catalyst (2) is present in an amount within the range of from 1.0 to 2.0 parts by weight per 100 parts of (1)(A) and (1)(B).

9. A method for providing a curable fluorosilicone composition which will cure to form a product having reduced shrinkage at elevated temperatures, comprising the step of mixing:
(1) a composition obtained by reacting at a temperature in the range of from 25°C to 180°C:
(A) from 93 to 98 parts of an alkenyl-terminated and silanol-terminated diorganopolysiloxane copolymer having a viscosity of from 1,000,000 to 300,000,000 mPa.s (centipoises) at 25°C., comprising units of the formulae RR¹SiO and R²₂SiO, wherein R is a fluoroalkyl radical, and R¹ and R² are each monovalent hydrocarbon radicals, the RR¹SiO units being present in an amount sufficient to provide a fluorine content of from 36 to 37 weight percent, the ratio of alkenyl endgroups to silanol endgroups being from 65:35 to 75:25, the alkenyl-on-chain content of the copolymer being from 0% to 0.6% by weight; the total silicon-bonded alkenyl content of the copolymer being from 0.007 to 0.02% by weight;
(B) from 2.0 to 7.0 parts of an alkenyl-terminated and silanol-terminated diorganopolysiloxane copolymer having a viscosity of from 1 ,000,000 to 300,000,000 mPa.s (centipoise) at 25°C., comprising units of the formulae RR¹SiO and R²₂SiO, wherein R is a fluoroalkyl radical, and R¹ and R² are each monovalent hydrocarbon radicals, the RR¹SiO units being present in an amount sufficient to provide a fluorine content of from 34 to 35.2 weight percent, the ratio of vinyl endgroups to silanol endgroups being from 65:35 to 75:25, the alkenyl-on-chain content of the copolymer being from 1.2% to 1.6% by weight; the total silicon-bonded alkenyl content of the copolymer being from 1.45% to 1.65% by weight; the sum of (A) and (B) being 100 parts;
(C) from 1 to 40 parts of a potassium aluminosilicate filler having the formula KAl₂(AlSi₃O₁₀)(OH)₂ or KAl₂(AlSi₃O₁₀)(F)₂ and having a surface area of from 5.0 to 6.50 square meters per gram and particles having an average diameter of from 1.0 to 20.0 micrometers and an average thickness of from 0.5 to 1.0 micrometers;
(D) from 5 to 60 parts of a pre-treated or untreated reinforcing silica filler having a surface area of from 180 to 225 square meters per gram; and
(E) from 0 to 50 parts of a condensable liquid diorganopolysiloxane having the general formula
HO(R⁴ ₂SiO)_{y}H
wherein R⁴ is a monovalent substituted or unsubstituted hydrocarbon radical and "y" has a value of from about 1 to about 20; with the proviso that if the reinforcing silica filler (D) is untreated, (E) is present in an amount of from 5 to 50 parts by weight to in situ treat the untreated silica filler (D); and
(2) a catalytic amount of an organic peroxide curing catalyst.

10. A fluorosilicone with reduced compression set obtained by curing the composition according to the method of claim 9.

## Patentansprüche

1. Hitzehärtbare Fluorsiliconkautschuk-Zusammensetzung, umfassend, bezogen auf das Gewicht:
(1) die Zusammensetzung, die erhalten ist durch Umsetzen bei einer Temperatur von 25°C bis 180°C:
(A) von 93 bis 98 Teilen eines Alkenyl-Endgruppen und Silanol-Endgruppen aufweisenden Polydiorganosiloxan-Copolymers mit einer Viskosität von 1.000.000 bis 300.000.000 mPa·s (centipoise) bei 25°C, umfassend Einheiten der Formeln RR¹SiO und R²₂SiO, worin R ein Fluoralkylrest ist und R¹ und R² jeweils einwertige Kohlenwasserstoffreste sind, wobei die RR¹SiO-Einheiten in einer genügenden Menge vorhanden sind, um einen Fluorgehalt von 36 bis 37 Gew.-% zu schaffen, das Verhältnis der Alkenyl-Endgruppen zu den Silanol-Endgruppen im Bereich von 65:35 bis 75:25 liegt, der Gehalt des Alkenyls an der Kette des Copolymers von 0 bis 0,6 Gew.-% beträgt, der insgesamt an Silicium gebundene Alkenylgehalt des Copolymers von 0,007 bis 0,02 Gew.-% beträgt;
(B) von 2,0 bis 7,0 Teilen eines Alkenyl-Endgruppen und Silanol-Endgruppen aufweisenden Polydiorganosiloxan-Copolymers mit einer Viskosität von 1.000.000 bis 300.000.000 mPa·s (centipoise) bei 25°C, umfassend Einheiten der Formeln RR¹SiO und R²₂SiO, worin R ein Fluoralkylrest ist und R¹ und R² jeweils einwertige Kohlenwasserstoffreste sind, wobei die RR¹SiO-Einheiten in einer genügenden Menge vorhanden sind, um einen Fluorgehalt von 34 bis 35,2 Gew.-% zu schaffen, das Verhältnis der Vinyl-Endgruppen zu den Silanol-Endgruppen im Bereich von 65:35 bis 75:25 liegt, der Gehalt des Copolymers an Alkenyl an der Kette von 1,2 bis 1,6 Gew.-% beträgt, der insgesamt an Silicium gebundene Alkenylgehalt des Copolymers von 1,45 bis 1,65 Gew.-% beträgt, und die Summe von (A) und (B) 100 Teile beträgt;
(C) von 1 bis 40 Teilen eines Kaliumaluminosilicat-Füllstoffes der Formel KAℓ₂(AℓSi₃O₁₀)(OH)₂ oder KAℓ₂(AℓSi₃O₁₀)(F)₂ mit einer Oberfläche von 5,0 bis 6,50 m²/g und Teilchen mit einem mittleren Durchmesser von 1,0 bis 20,0 µm und einer mittleren Dicke von 0,5 bis 1,0 µm;
(D) von 5 bis 60 Teilen eines vorbehandelten oder unbehandelten, verstärkenden Siliciumdioxid-Füllstoffes mit einer Oberfläche von 180 bis 225 m²/g und
(E) von 0 bis 50 Teilen eines kondensierbaren, flüssigen Polydiorganosiloxans der allgemeinen Formel
HO(R⁴ ₂SiO)_{y}H
worin R⁴ ein einwertiger substituierter oder unsubstituierter Kohlenwasserstoffrest ist und "y" einen Wert von 1 bis 20 aufweist, unter der Bedingung, daß, wenn der verstärkende Siliciumdioxid-Füllstoff (D) unbehandelt ist, (E) in einer Menge von 5 bis 50 Gewichtsteilen vorhanden ist, um in situ den unbehandelten Siliciumdioxid-Füllstoff (D) zu behandeln, und
(2) eine katalytische Menge eines organischen Peroxid-Härtungskatalysators.

2. Zusammensetzung nach Anspruch 1, worin der Kaliumaluminosilicat-Füllstoff (1)(C) eine Oberfläche von 5,05 bis 6,2 m²/g aufweist.

3. Zusammensetzung nach Anspruch 1 oder 2, worin der Kaliumaluminosilicat-Füllstoff (1)(C) einen mittleren Teilchendurchmesser von 1,0 bis 10,0 µm und eine mittlere Teilchendicke von 0,5 bis 0,8 µm aufweist.

4. Zusammensetzung nach einem vorhergehenden Anspruch, worin der verstärkende Siliciumdioxid-Füllstoff (1)(D) pyrogenes Siliciumdioxid ist.

5. Zusammensetzung nach einem vorhergehenden Anspruch, worin der Siliciumdioxid-Füllstoff (1)(D) vorbehandelt ist.

6. Zusammensetzung nach einem der Ansprüche 1 bis 4, worin der Siliciumdioxid-Füllstoff (1)(D) durch das kondensierbare, flüssige Diorganopolysiloxan (1)(E) in situ behandelt ist.

7. Zusammensetzung nach Anspruch 6,worin (1)(E) in einer Menge im Bereich von 5 bis 50 Gewichtsteilen auf 100 Teile des Siliciumdioxid-Füllstoffes (C) vorhanden ist.

8. Zusammensetzung nach einem vorhergehenden Anspruch, worin der organische Peroxid-Härtungskatalysator (2) in einer Menge im Bereich von 1,0 bis 2,0 Gewichtsteilen auf 100 Gewichtsteile von (1)(A) und (1)(B) vorhanden ist.

9. Verfahren zum Herstellen einer härtbaren Fluorsilicon-Zusammensetzung, die unter Bildung eines Produktes verringerter Schrumpfung bei erhöhten Temperaturen härtet, umfassend die Stufe des Vermischens:
(1) einer Zusammensetzung, die erhalten ist durch Umsetzen bei einer Temperatur von 25°C bis 180°C:
(A) von 93 bis 98 Teilen eines Alkenyl-Endgruppen und Silanol-Endgruppen aufweisenden Polydiorganosiloxan-Copolymers mit einer Viskosität von 1.000.000 bis 300.000.000 mPa·s (centipoise) bei 25°C, umfassend Einheiten der Formeln RR¹SiO und R²₂SiO, worin R ein Fluoralkylrest ist und R¹ und R² jeweils einwertige Kohlenwasserstoffreste sind, wobei die RR¹SiO-Einheiten in einer genügenden Menge vorhanden sind, um einen Fluorgehalt von 36 bis 37 Gew.-% zu schaffen, das Verhältnis der Alkenyl-Endgruppen zu den Silanol-Endgruppen im Bereich von 65:35 bis 75:25 liegt, der Gehalt des Alkenyls an der Kette des Copolymers von 0 bis 0,6 Gew.-% beträgt, der insgesamt an Silicium gebundene Alkenylgehalt des Copolymers von 0,007 bis 0,02 Gew.-% beträgt;
(B) von 2,0 bis 7,0 Teilen eines Alkenyl-Endgruppen und Silanol-Endgruppen aufweisenden Polydiorganosiloxan-Copolymers mit einer Viskosität von 1.000.000 bis 300.000.000 mPa·s (centipoise) bei 25°C, umfassend Einheiten der Formeln RR¹SiO und R²₂SiO, worin R ein Fluoralkylrest ist und R¹ und R² jeweils einwertige Kohlenwasserstoffreste sind, wobei die RR¹SiO-Einheiten in einer genügenden Menge vorhanden sind, um einen Fluorgehalt von 34 bis 35,2 Gew.-% zu schaffen, das Verhältnis der Vinyl-Endgruppen zu den Silanol-Endgruppen im Bereich von 65:35 bis 75:25 liegt, der Gehalt des Copolymers an Alkenyl an der Kette von 1,2 bis 1,6 Gew.-% beträgt, der insgesamt an Silicium gebundene Alkenylgehalt des Copolymers von 1,45 bis 1,65 Gew.-% beträgt, und die Summe von (A) und (B) 100 Teile beträgt;
(C) von 1 bis 40 Teilen eines Kaliumaluminosilicat-Füllstoffes der Formel KAℓ₂(AℓSi₃O₁₀)(OH)₂ oder KAℓ₂(AℓSi₃O₁₀)(F)₂ mit einer Oberfläche von 5,0 bis 6,50 m²/g und Teilchen mit einem mittleren Durchmesser von 1,0 bis 20,0 µm und einer mittleren Dicke von 0,5 bis 1,0 µm;
(D) von 5 bis 60 Teilen eines vorbehandelten oder unbehandelten, verstärkenden Siliciumdioxid-Füllstoffes mit einer Oberfläche von 180 bis 225 m²/g und
(E) von 0 bis 50 Teilen eines kondensierbaren, flüssigen Polydiorganosiloxans der allgemeinen Formel
HO(R⁴ ₂SiO)_{y}H
worin R⁴ ein einwertiger substituierter oder unsubstituierter Kohlenwasserstoffrest ist und "y" einen Wert von 1 bis 20 aufweist, unter der Bedingung, daß, wenn der verstärkende Siliciumdioxid-Füllstoff (D) unbehandelt ist, (E) in einer Menge von 5 bis 50 Gewichtsteilen vorhanden ist, um in situ den unbehandelten Siliciumdioxid-Füllstoff (D) zu behandeln, und
(2) einer katalytischen Menge eines organischen Peroxid-Härtungskatalysators.

10. Fluorsilicon mit verringerter, bleibender Verformung, erhalten durch Härten der Zusammensetzung gemäß dem Verfahren nach Anspruch 9.

## Revendications

1. Composition élastomère thermodurcissable à base de fluorosilicone, comprenant en poids :
(1) une composition que l'on obtient en faisant réagir, à une température comprise dans l'intervalle allant de 25 °C à 180 °C,
(A) de 93 à 98 parties d'un copolymère diorganopolysiloxane à terminaisons silanol et alcényle ayant une viscosité à 25 °C allant de 1 000 000 à 300 000 000 mPa.s (centipoises), comprenant des motifs de formule RR¹SiO et R²₂SiO où R représente un radical fluoroalkyle et R¹ et R² représentent chacun un radical hydrocarboné monovalent, les motifs RR¹SiO étant présents en une quantité suffisante pour fournir une teneur en fluor comprise entre 36 et 37 % en poids, le rapport des groupes terminaux alcényle aux groupes terminaux silanol étant compris entre 65/35 et 75/25, la teneur en groupes alcényle sur la chaîne du copolymère étant comprise entre 0 % et 0,6 % en poids, la teneur totale en groupes alcényle liés à des atomes de silicium du copolymère étant comprise entre 0,007 et 0,02 % en poids;
(B) de 2,0 à 7,0 parties d'un copolymère diorganopolysiloxane à terminaisons alcényle et silanol ayant une viscosité à 25 °C allant de 1 000 000 à 300 000 000 mPa.s (centipoises), comprenant des motifs de formule RR¹SiO et R²₂SiO où R représente un radical fluoroalkyle et R¹ et R² représentent chacun un radical hydrocarboné monovalent, les motifs RR¹SiO étant présents en une quantité suffisante pour fournir une teneur en fluor comprise entre 34 et 35,2 % en poids, le rapport des groupes terminaux vinyle aux groupes terminaux silanol étant compris entre 65/35 et 75/25, la teneur en groupes alcényle sur la chaîne du copolymère étant comprise entre 1,2 % et 1,6 %, la teneur totale en groupes alcényle liés à des atomes de silicium du copolymère étant comprise entre 1,45 % et 1,65 % en poids, la somme de (A) et (B) étant égale à 100 parties en poids;
(C) de 1 à 40 parties d'une charge de type aluminosilicate de potassium correspondant à la formule KAl₂(AlSi₃O₁₀)(OH)₂ ou KAl₂(AlSi₃O₁₀)(F)₂ et ayant une surface spécifique comprise entre 5,0 et 6,50 m²/gramme et des particules ayant un diamètre moyen allant de 1,0 à 20,0 µm et une épaisseur moyenne allant de 0,5 à 1,0 µm;
(D) de 5 à 60 parties d'une charge de renforcement de type silice traitée au préalable ou non traitée ayant une surface spécifique allant de 180 à 225 m²/g; et
(E) de O à 50 parties d'un diorganopolysiloxane liquide condensable correspondant à la formule générale
HO(R⁴ ₂SiO)_{y}H
où R⁴ est un radical hydrocarboné monovalent substitué ou non substitué, et "y" a une valeur comprise entre environ 1 et environ 20, avec la réserve que, si la charge renforçante de silice (D) est non traitée, (E) soit présent à raison de 5 à 50 parties en poids dans la but de traiter *in situ* la charge de silice non traitée (D); et
(2) une quantité catalytique d'un catalyseur de durcissement de type peroxyde organique.

2. Composition selon la revendication 1, dans laquelle la charge de type aluminosilicate de potassium (1)(C) a une surface spécifique comprise dans l'intervalle allant de 5,05 à 6,2 m²/g.

3. Composition selon la revendication 1 ou 2 dans laquelle la charge de type aluminosilicate de potassium (1)(C) comprend des particules ayant un diamètre moyen compris dans l'intervalle allant de 1,0 à 10,0 µm et une épaisseur moyenne comprise dans l'intervalle allant de 0,5 à 0,8 µm.

4. Composition selon l'une quelconque des revendications précédentes dans laquelle la charge renforçante de type silice (1)(D) est de la silice fumée.

5. Composition selon l'une quelconque des revendications précédentes dans laquelle la charge de type silice (1)(D) est prétraitée.

6. Composition selon l'une quelconque des revendications 1 à 4 dans laquelle la charge de type silice (1)(D) est traitée *in situ* par le diorganopolysiloxane liquide condensable (1)(E).

7. Composition selon la revendication 6 dans laquelle (1)(E) est présent en une quantité comprise entre 5 et 50 parties en poids pour 100 parties de charge de type silice (C).

8. Composition selon l'une quelconque des revendications précédentes dans laquelle l'agent de durcissement de type peroxyde organique (2) est présent en une quantité comprise dans l'intervalle allant de 1,0 à 2,0 parties en poids pour 100 parties de (1)(A) et de (1)(B).

9. Procédé permettant de fournir une composition thermodurcissable à base de fluorosilicone qui, en durcissant, forme un produit présentant un retrait plus faible aux températures élevées, lequel procédé comprend l'étape consistant à mélanger :
(1) une composition que l'on obtient en faisant réagir, à une température comprise dans l'intervalle allant de 25 °C à 180 °C,
(A) de 93 à 98 parties d'un copolymère diorganopolysiloxane à terminaisons silanol et alcényle ayant une viscosité à 25 °C allant de 1 000 000 à 300 000 000 mPa.s (centipoises), comprenant des motifs de formule RR¹SiO et R²₂SiO où R représente un radical fluoroalkyle et R¹ et R² représentent chacun un radical hydrocarboné monovalent, les motifs RR¹SiO étant présents en une quantité suffisante pour fournir une teneur en fluor comprise entre 36 et 37 % en poids, le rapport des groupes terminaux alcényle aux groupes terminaux silanol étant compris entre 65/35 et 75/25, la teneur en groupes alcényle sur la chaîne du copolymère étant comprise entre 0 % et 0,6 % en poids, la teneur totale en groupes alcényle liés à des atomes de silicium du copolymère étant comprise entre 0,007 et 0,02 % en poids;
(B) de 2,0 à 7,0 parties d'un copolymère diorganopolysiloxane à terminaisons alcényle et silanol ayant une viscosité à 25 °C allant de 1 000 000 à 300 000 000 mPa.s (centipoises), comprenant des motifs de formule RR¹SiO et R²₂SiO où R représente un radical fluoroalkyle et R¹ et R² représentent chacun un radical hydrocarboné monovalent, les motifs RR¹SiO étant présents en une quantité suffisante pour fournir une teneur en fluor comprise entre 34 et 35,2 % en poids, le rapport des groupes terminaux vinyle aux groupes terminaux silanol étant compris entre 65/35 et 75/25, la teneur en groupes alcényle sur la chaîne du copolymère étant comprise entre 1,2 % et 1,6 % en poids, la teneur totale en groupes alcényle liés à des atomes de silicium du copolymère étant comprise entre 1,45 % et 1,65 % en poids, la somme de (A) et (B) étant égale à 100 parties;
(C) de 1 à 40 parties d'une charge de type aluminosilicate de potassium correspondant à la formule KAl₂(AlSi₃O₁₀)(OH)₂ ou KAl₂(AlSi₃O₁₀)(F)₂ et ayant une surface spécifique comprise entre 5,0 et 6,50 m²/gramme et des particules ayant un diamètre moyen allant de 1,0 à 20,0 µm et une épaisseur moyenne allant de 0,5 à 1,0 µm;
(D) de 5 à 60 parties d'une charge de renforcement de type silice traitée au préalable ou non traitée ayant une surface spécifique allant de 180 à 225 m²/g; et
(E) de 0 à 50 parties d'un diorganopolysiloxane liquide condensable correspondant à la formule générale
HO(R⁴ ₂SiO)_{y}H
où R⁴ est un radical hydrocarboné monovalent substitué ou non substitué, et "y" a une valeur comprise entre environ 1 et environ 20, avec la réserve que, si la charge renforçante de silice (D) est non traitée, (E) soit présent à raison de 5 à 50 parties en poids dans le but de traiter *in situ* la charge de silice non traitée (D); et
(2) une quantité catalytique d'un catalyseur de durcissement de type peroxyde organique.

10. Fluorosilicone présentant une déformation permanente réduite, que l'on obtient par durcissement de la composition préparée conformément à la revendication 9.
